# EUROPÄISCHE PATENTANMELDUNG

(11) **EP 4 309 826 A1**
(43) Veröffentlichungstag der Anmeldung: **24.01.2024**
(21) Anmeldenummer: 23185595.8
(22) Anmeldetag: 14.07.2023
(51) Int. Cl.: B21D 51/26, B65B 7/28

(54) **ZUFUHREINRICHTUNG FÜR EINEN VERSCHLIESSER**

(30) Priorität: 19.07.2022 EP 22185610
(71) Anmelder: Ferrum Packaging AG, 5503 Schafisheim (CH)
(72) Erfinder: Müller, Thomas, 5745 Safenwil (CH)
(74) Vertreter: IPS Irsch AG

(57) **Zusammenfassung**

Die Erfindung betrifft eine Zufuhreinrichtung (1) für einen Verschliesser (1000) zum Führen eines Deckels (101) zu einem Behälter (100) umfassend eine Bewegungsvorrichtung (10), welche derart beweglich angeordnet ist, dass der Deckel (101) durch die Bewegungsvorrichtung (10) bewegbar ist, und eine an der Bewegungsvorrichtung (10) angeordnete Deckelführung (15A, 15B) zum Führen des Deckels (101) zu dem Behälter (100). Dabei umfasst die Deckelführung (15A, 15B) eine erste Leitfläche (22A) und eine zweite Leitfläche (22B), wobei der Deckel (101) derart zwischen der ersten Leitfläche (22A) und der zweiten Leitfläche (22B) angeordnet werden kann, dass der Deckel (101) durch die relative Bewegung der Bewegungsvorrichtung (10) zu der ersten Leitfläche (22A) und der zweiten Leitfläche (22B) zum Behälter führbar ist.

## Beschreibung

Die Erfindung betrifft eine Zufuhreinrichtung für einen Verschliesser und einen Verschliesser zum Verschliessen eines Behälters. Die Erfindung betrifft weiter ein Verfahren zum Verschliessen eines Behälters mit einer erfindungsgemässen Zufuhreinrichtung und einem erfindungsgemässen Verschliesser.

Bei der Abfüllung von Getränkedosen oder Lebensmitteldosen durchlaufen die Dosen nach der Befüllung mit dem Getränk oder dem Lebensmittel einen Dosenverschliesser, wobei die befüllten Dosenkörper über einen Zuführweg einlaufen und über einen weiteren Zuführweg Dosendeckel einlaufen. Der Dosenverschliesser weist üblicherweise mehrere karussellförmig angeordnete, gleichartige Stationen auf, in denen jeweils eine Dose mit einem Dosendeckel verschlossen wird. Die Dosendeckel werden dabei auf die Dosenkörper geführt und mit einer Halteplatte eines Falzkopfes auf dem Dosenkörper gehalten. Dieses Halten dient auch der Fixierung der Dosen gegen ein Ausbrechen aus der von den Dosen in dem Dosenverschliesser durchlaufenen Kreisbahn aufgrund der Zentrifugalkraft. In dem Dosenverschliesser werden dabei die Dosenkörper mit dem Dosendeckel randseitig über eine Falzrolle gefalzt und somit verschlossen. In der Regel wird die Dose mit dem Dosendeckel dabei mittels des Falzkopfes zusätzlich um die eigene Symmetrieachse rotiert. Zur Rotation sind die Falzrollen und Falzköpfe an einer jeweiligen Falzwelle angeordnet.

Ein gattungsgemässer Dosenverschliesser ist in der DE 749636 und der DE4234115 A1 beschrieben. Der Dosenverschliesser umfasst eine Einspannvorrichtung zur Aufnahme einer zu verschliessenden Dose. Im Betriebszustand ist die zu verschliessende Dose in die Einspannvorrichtung eingebracht und durch diese in axialer und radialer Richtung gesichert. Ebenso ist ein Dosendeckel über der Dosenöffnung der zu verschliessenden Dose zentriert eingebracht. Die Dose weist im Bereich der Dosenöffnung einen umlaufenden Dosenflansch und der Dosendeckel einen umlaufenden Dosendeckelflansch auf. Zum Verschliessen der Dosenöffnung durch den Dosendeckel umfasst der Dosenverschliesser zusätzlich zwei um jeweils eine Achse drehbar gelagerte Falzrollen, die den Dosenflansch und den Dosendeckelflansch mittels einer im wesentlichen radial wirkenden Kraft miteinander verpressen, wobei die Verpressung durch ein kontinuierliches Abrollen in Umfangsrichtung entlang dem Umfang der Dosenöffnung erfolgt.

Ein weiterer Dosenverschliesser ist aus der GB 2098899 A bekannt. Der Dosenverschliesser umfasst eine Einspannvorrichtung zur Aufnahme der zu verschliessenden Dose und eine Falzrolle. Im Betriebszustand ist die zu verschliessende Dose in die Einspannvorrichtung eingebracht und durch diese in axialer und radialer Richtung gesichert. Ebenso ist ein Dosendeckel über der Dosenöffnung der zu verschliessenden Dose zentriert eingebracht. Die Dose weist im Bereich der Dosenöffnung des Dosenkörpers einen umlaufenden Dosenflansch und der Dosendeckel einen umlaufenden Dosendeckelflansch auf.

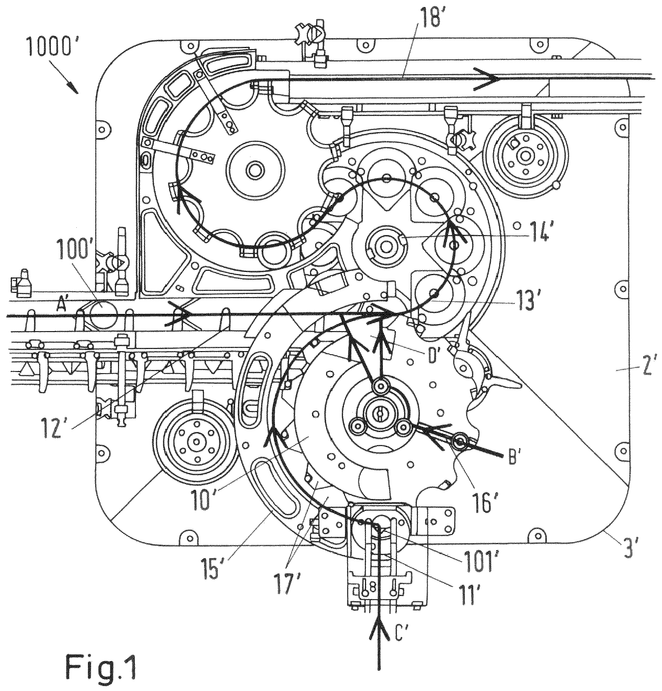

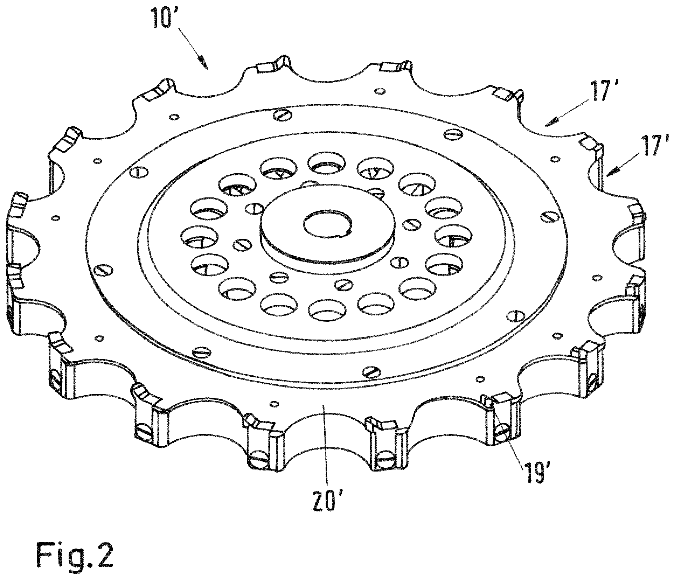

Zum besseren Verständnis der vorliegenden Erfindung wird im Folgenden ein aus dem Stand der Technik bekannter Dosenverschliesser mit Zufuhreinrichtung anhand der Fig. 1 und 2 beschrieben.

Zur besseren Unterscheidung des bekannten Standes der Technik von der vorliegenden Erfindung werden im Rahmen dieser Anmeldung Bezugszeichen zu Merkmalen bekannter Vorrichtungen mit einem Hochkomma (in Fig. 1 und 2) versehen, während Merkmale zu erfindungsgemässen Vorrichtungen oder deren Bestandteilen kein Hochkomma tragen.

Der bekannte Dosenverschliesser 1000' gemäss Fig. 1 umfasst eine Deckelbereitstellungsvorrichtung 11' zur Bereitstellung eines Deckels 101', einen Begasungsrotor 10' zur Zuführung von Gas zur Dose 100' und zum Führen und Transportieren des Deckels 101' zu der Dose 100'. Ausserdem umfasst der Verschliesser einen Falzprozess / Karussell mit Falzstationen 14' zum Verschliessen der Dose 100' mit dem Deckel 101'. Dabei ist der Falzprozess 14' in einem von einem Gehäuse 3' umgebenen Arbeitsraum 2' des Dosenverschliessers 1000' angeordnet.

Der Deckel 101' wird entlang des Pfeiles C' durch die Deckelbereitstellungsvorrichtung 11' in den Arbeitsraum 2' des Dosenverschliesser 1000' eingebracht. Hierbei werden die Deckel 101' auf dem Begasungsrotor 10' abgelegt. Durch Rotation des Begasungsrotors 10' werden die Deckel 101' weiter transportiert. Dann werden die Dosen 100' in Richtung A' durch die Behälterzuführung 12' in die Behälteraufnahmen 17' des Begasungsrotors 10' eingebracht. Dort wird die Dose im Bereich D' mit einem Gas wie Kohlenstoffdioxid oder Stickstoff begast und mit dem Deckel 101' vereint.

Die Begasung erfolgt entlang des Pfeiles B' mit der Gaszufuhr 16' über den Begasungsrotor 10'. Nach der Begasung wird die Dose 100' mit dem Deckel 101' durch die Behälterüberführung 13' vom Begasungsrotor 10' zum Falzprozess 14' weitergeführt und dort verschlossen.

Dabei werden die Dosen 100' mit Deckel 101' eingespannt und durch den Falzprozess 14' verschlossen. Die verschlossene Dose wird durch einen weiteren Rotor in den Dosenausgang 18' gefördert.

Bei der Begasung durch den Begasungsrotor 10' wird das Gas zu einer Unterseite des Deckels 101' gefördert. Somit kann gewährleistet werden, dass ein Restvolumen der Dose 100', in welchem kein Lebensmittel angeordnet ist, vor dem Verschliessen im Wesentlichen mit dem Gas befüllt ist, wobei die ursprünglich im Restvolumen vorhandene Luft durch das Gas möglichst vollständig verdrängt wird. Hiermit lässt sich gegebenenfalls eine längere Haltbarkeit des in der Dose 100' angeordneten Lebensmittels erreichen.

Wie vorangehend erwähnt, wird der Deckel 101' immer auf dem Begasungsrotor 10' abgelegt und nur noch durch eine stationäre Schiene 15' gestützt. Der Begasungsrotor 10' weist jedoch Störkonturen auf, welche ein effizientes Begasen der Dose 100' bei der Vereinigung mit dem Deckel 101' erschweren. Ausserdem wird die mögliche Vielfalt an Dosenformen durch Form der Ausnehmungen 17' und die Form der Deckelaufnahmen 20' mit DeckelMitnehmer 19' begrenzt.

Deshalb sind Werkzeugwechsel zur Anpassung an andere Dosenformate nicht zu vermeiden. Dabei sind die heutigen Werkzeugwechselzeiten sehr hoch.

Ausserdem werden die Deckel 101' in der Schiene 15' in radial gefrästen Nuten gehalten. Hierdurch wird eine Reinigung deutlich erschwert, da das Reinigungsmedium nur schwer in die Nuten eindringen kann.

Aufgabe der Erfindung ist es daher, eine Zufuhreinrichtung und einen Verschliesser bereitzustellen, welche die aus dem Stand der Technik bekannten nachteiligen Wirkungen vermeiden. Insbesondere sollen eine Zufuhreinrichtung und ein Verschliesser bereitgestellt werden, welche einfach ausgestaltet, vielfältig einsetzbar und schnell anpassbar sowie einfach zu reinigen sind.

Die Aufgabe wird durch eine erfindungsgemässe Zufuhreinrichtung, einen erfindungsgemässen Verschliesser und durch das erfindungsgemässe Verfahren gelöst.

Erfindungsgemäss wird dabei eine Zufuhreinrichtung für einen Verschliesser zum Führen eines Deckels zu einem Behälter vorgeschlagen. Dabei umfasst die Zufuhreinrichtung eine Bewegungsvorrichtung, welche derart beweglich angeordnet ist, dass der Deckel durch die Bewegungsvorrichtung bewegbar ist, und eine an der Bewegungsvorrichtung angeordnete Deckelführung zum Führen des Deckels zu dem Behälter. Die Deckelführung hat eine erste Leitfläche und eine zweite Leitfläche, wobei der Deckel derart zwischen der ersten Leitfläche und der zweiten Leitfläche angeordnet werden kann, dass der Deckel durch eine relative Bewegung der Bewegungsvorrichtung zu der ersten Leitfläche und der zweiten Leitfläche zum Behälter führbar ist.

Somit kann der Deckel durch die Bewegungsvorrichtung in Bewegung versetzt werden, die Richtung der Deckelbewegung wird jedoch durch die Deckelführung also die erste und zweite Leitfläche vorgegeben. Dabei ist der Deckel vorzugsweise auf der Deckelführung abgestützt / wird durch die Deckelführung getragen und wird nicht wie im Stand der Technik auf der Bewegungsvorrichtung abgelegt (also wird nicht durch die Bewegungsvorrichtung getragen). Der Deckel kann also derart auf der Deckelführung abstützbar sein, dass der Deckel durch die Deckelführung getragen wird.

Unter der relativen Bewegung der Bewegungsvorrichtung zu der ersten Leitfläche und der zweiten Leitfläche kann insbesondere verstanden werden, dass die erste Leitfläche und die zweite Leitfläche stationär (also unbeweglich) angeordnet sind, wobei sich die Bewegungsvorrichtung an der ersten Leitfläche und der zweiten Leitfläche vorbei bewegt und so den Deckel zwischen den Leitflächen bewegt. Vorzugsweise ist die Bewegungsvorrichtung entlang der ersten Leitfläche und der zweiten Leitfläche bewegbar, insbesondere zwischen der ersten Leitfläche und der zweiten Leitfläche bewegbar, sodass der Deckel zwischen den Leitflächen bewegbar ist.

Zum Tragen / Abstützen des Deckels kann die Deckelführung eine Abstützfläche, vorzugsweise eine erste und zweite Abstützfläche umfassen, auf welcher / welchen der Deckel angeordnet werden kann und auf / über welche der Deckel durch die Bewegungsvorrichtung bewegbar ist. Somit wäre der Deckel entlang der ersten und zweiten Leitfläche und auf der (ersten und zweiten) Abstützfläche bewegbar. Schräge Leitflächen (mit einem Winkel ungleich 90° im Vergleich zu einer Deckeloberfläche) können jedoch auch als Abstützflächen fungieren, sodass der Deckel auf den schrägen Leitflächen angeordnet werden kann.

Besonders bevorzugt wird der Deckel ausschliesslich durch die Abstützfläche / Abstützflächen oder die schrägen Leitflächen getragen und nicht auf der Bewegungsvorrichtung abgelegt.

Durch die erfindungsgemässe Zufuhreinrichtung wird also insbesondere eine einfachere und stabilere Deckelführung bereitgestellt. Der Deckel muss insbesondere nicht mehr auf einem Begasungsrotor abgelegt werden, sondern kann bis zum Zusammenführen mit dem Behälter auf der Deckelführung aufliegen. Da der Deckel nicht mehr auf dem Begasungsrotor aufliegt, kann eine grössere Vielfalt an Dosenformen (besonders in Bezug auf einen Neckbereich des Behälters) verschlossen werden.

Um eine einfache und schnelle Anpassung an verschiedene Deckelformate und Formen zu ermöglichen können die erste und zweite Leitfläche derart verschiebbar zueinander angeordnet sein, dass ein Abstand zwischen der ersten und zweiten Leitfläche veränderbar ist. So kann die Wechselzeit von Maschinenteilen im Verschliesser deutlich reduziert werden.

In Ausführung der Erfindung kann die Deckelführung derart stationär in der Zufuhreinrichtung angeordnet sein, dass der Deckel durch die Bewegung der Bewegungsvorrichtung entlang der Deckelführung zum Behälter führbar ist.

Ausserdem kann die Bewegungsvorrichtung einen Mitnehmer umfassen. Vorzugsweise ist der Mitnehmer derart an der Bewegungsvorrichtung angebracht, dass der Deckel durch den Mitnehmer aufnehmbar und durch den Mitnehmer in der Deckelführung bewegbar ist. Der Mitnehmer ist dabei also der Teil der Bewegungsvorrichtung, durch welche der Deckel kontaktiert und bewegt wird.

In der Deckelführung bewegbar bedeutet dabei insbesondere, dass der Mitnehmer den Deckel an den Leitflächen entlang und über die Leitflächen oder Abstützflächen bewegen kann. Hierfür dann der Mitnehmer bewegbar zwischen der ersten Leitfläche und der zweiten Leitfläche (gegebenenfalls auch zwischen der ersten und zweiten Abstützfläche) angeordnet sein.

In der Praxis kann die Bewegungsvorrichtung eine Vielzahl von Mitnehmern umfassen, sodass eine Vielzahl der Deckel durch die Vielzahl der Mitnehmer aufnehmbar und durch die Deckelführung bewegbar ist. Vorzugsweise kann die Vielzahl der Mitnehmer entlang eines Umfangs der Bewegungsvorrichtung verteilt angeordnet sein. Hierbei kann die Vielzahl der Mitnehmer kreisförmig entlang des Umfangs der Bewegungsvorrichtung angeordnet sein. Besonders bevorzugt ist die Bewegungsvorrichtung dabei an einer Welle befestigt und durch diese Welle rotierbar um eine Achse angeordnet, sodass der Deckel durch eine Rotation der Bewegungsvorrichtung bewegbar ist. Die Bewegungsvorrichtung kann also eine rotierbare Bewegungsvorrichtung sein. Hierfür ist die Bewegungsvorrichtung vorzugsweise scheibenförmig oder kreisringförmig ausgestaltet und die Welle in einem Mittelpunkt der Bewegungsvorrichtung angeordnet.

An der Bewegungsvorrichtung angeordnete Mitnehmer können derart auf einer Oberfläche der Bewegungsvorrichtung (also insbesondere der Scheibe / des Kreisrings) angeordnet sein, dass sie sich in Richtung der Achse erstrecken, um welche die Welle rotiert, beziehungsweise können auf einer Oberfläche der Bewegungsvorrichtung (also insbesondere der Scheibe / des Kreisrings) angeordnet sein, welche sich senkrecht zur Achse erstreckt, um welche die Welle rotiert.

Alternativ zur rotierbaren Bewegungsvorrichtung kann auch eine linear bewegliche Bewegungsvorrichtung verwendet werden.

Besonders bevorzugt umfasst die Deckelführung eine erste Schiene und entlang der ersten Schiene angeordnete zweite Schiene, insbesondere eine zur ersten Schiene parallel verlaufende zweite Schiene. Dabei umfasst die erste Schiene die erste Leitfläche sowie die zweite Schiene die zweite Leitfläche derart, dass der Deckel durch (beziehungsweise entlang) die erste und die zweite Schiene zum Behälter führbar ist. Zusätzlich kann die erste Schiene die erste Abstützfläche sowie die zweite Schiene die zweite Abstützfläche derart umfassen, dass der Deckel über die erste und die zweite Schiene zum Behälter führbar ist. Alternativ können die Leitflächen der Schienen wie vorangehend erwähnt auch schräg verlaufen.

Die Bewegungsvorrichtung kann mit einem nach oben-gerichteten Mitnehmer unter der ersten und zweiten Schiene oder mit einem nach unten-gerichteten Mitnehmer über der ersten und zweiten Schiene angeordnet sein. Hierbei ist der Mitnehmer vorzugsweise in einer Ausnehmung zwischen der ersten und zweiten Schiene bewegbar. Zwischen der ersten und der zweiten Schiene kann also derart eine Ausnehmung vorgesehen sein, dass die Bewegungsvorrichtung (beziehungsweise Mitnehmer) zur Bewegung des Deckels durch die Ausnehmung bewegbar ist.

Ausserdem kann die erste und / oder zweite Schiene durch eine Vielzahl von Schienenelementen gebildet werden. Alternativ zu den Schienen können die Leitflächen auch die beiden seitlichen Begrenzungsflächen einer in ein Führungselement eingebrachten Nut sein.

Zusätzlich zu den Leitflächen und insbesondere auch zu den Abstützflächen kann die Zufuhreinrichtung eine Niederhaltevorrichtung umfassen. Hierbei ist die Niederhaltevorrichtung derart an der Deckelführung angeordnet, dass eine Bewegbarkeit des Deckels in eine Raumrichtung einschränkbar ist. Wird der Deckel also (von unten) durch die Leitflächen beziehungsweise Abstützflächen getragen / gestützt, kann die Niederhaltevorrichtung die Bewegbarkeit des Deckels nach oben einschränken, indem der Deckel zwischen den Leitflächen beziehungsweise Abstützflächen und der Niederhaltevorrichtung angeordnet ist / bewegt wird.

In einer bevorzugten Ausführungsform hat die Deckelführung die erste Schiene mit der ersten Leitfläche und die zweite Schiene mit der zweiten Leitfläche, und die Niederhaltevorrichtung ist derart zwischen den Schienen angeordnet ist, dass eine Bewegbarkeit des Deckels in ein Raumrichtung einschränkbar ist / eingeschränkt wird. Dabei kann die Niederhaltevorrichtung als eine Leitschiene angesehen werden und insbesondere parallel zu den Schienen verlaufen. Besonders bevorzugt ist die Niederhaltevorrichtung dabei mit nach oben offenen Schienen kombiniert, um eine erhöhte Hygiene durch einfachere Reinigung zu gewährleisten.

Besonders bevorzugt kann die Deckelführung ausserdem eine Begasungsvorrichtung umfassen. Diese Begasungsvorrichtung kann an einem (einer Verschliessvorrichtung) zugewandten Seite der ersten und / oder zweiten Schiene angeordnet sein. Durch die Begasungsvorrichtung wird der Behälter vor dem Auflegen des Deckels begast. Die Begasung kann mit einem Gas wie Kohlenstoffdioxid oder Stickstoff erfolgen.

Während die erste und zweite Schiene bevorzugt derart ausgeformt sind, dass der Deckel radial geführt wird und sich somit vorzugsweise koradial zur Bewegungsvorrichtung bewegt, kann die Begasungsvorrichtung derart ausgeformt sein, dass der Deckel in einem Begasungsbereich der Begasungsvorrichtung linear geführt wird. Dies hat der Vorteil, dass die Begasungswerte verbessert und die Übergabe zum Behälter optimiert werden kann.

Die Begasung erfolgt also bevorzugt durch die stationär an den (stationären) Schienen angeordnete Begasungsvorrichtung. Die Begasung muss nicht mehr durch einen Begasungsrotor / die Bewegungsvorrichtung erfolgen.

Der Deckel muss also insbesondere nicht mehr auf einem Begasungsrotor abgelegt werden, sondern kann bis zum Zusammenführen mit dem Behälter auf der Deckelführung aufliegen. Dies hat den Vorteil, dass die Störkonturen vom Begasungsrotor beim Aufstieg des Behälters entfallen. Somit können kostensparende und hygienischere Bewegungsvorrichtungen (wie z.B. Deckelrotoren) konstruiert werden.

Die erste und zweite Schiene sind mit den Leit- und / oder Abstützflächen vorzugsweise so ausgestaltet, dass diese nach oben offen sind. Damit kann ein Reinigungsmedium ungehindert die Deckelauflage (also die Leit- und / oder Abstützflächen) reinigen.

Ausserdem wird ein Verschliesser mit einer erfindungsgemässen Zufuhreinrichtung vorgeschlagen. Dabei umfasst der Verschliesser weiter ein Karussell mit einer Vielzahl von Verschliessvorrichtungen, eine Behälterzufuhr für die Behälter, insbesondere mit einem Produkt gefüllte Behälter, zu dem Karussell und einen Auslauf für (mit dem Deckel) verschlossene Behälter von dem Karussell.

Vorzugsweise führt die erfindungsgemässe Zufuhreinrichtung die Deckel von einer Abstapelung bis zur Übergabe auf den Behälter. Nach einem Abstapelprozess, bei welchem die Deckel durch die Abstapelung von einem Stapel einzeln getrennt werden, liegt der Deckel dabei zwischen den Leitflächen auf der Deckelführung. Dabei kann die Zufuhreinrichtung in einem Arbeitsraum des Verschliessers unterhalb der Abstapelung angeordnet sein.

Erfindungsgemäss wird weiter ein Verfahren zum Verschliessen des Behälters mit dem Deckel vorgeschlagen. Im erfindungsgemässen Verfahren wird die erfindungsgemässe Zufuhreinrichtung bereitgestellt und der Deckel mit der Zufuhreinrichtung zu dem Behälter transportiert. Anschliessend wird der Deckel auf eine Öffnung des Behälters aufgelegt und der Behälter mit dem Deckel verschlossen.

Das Verschliessen des Behälters kann dabei das Positionieren des Behälters auf einer Hubstation, das Falzen des Deckels an den Behälter mittels wenigstens einer Falzrolle, insbesondere mit zwei Falzrollen, und dem Falzkopf umfassen. Abschliessend kann der verschlossene Behälter aus dem Arbeitsraum des Verschliesser abgeführt werden.

Dabei ist der Arbeitsraum der Raum des Verschliessers, in welchem der Behälter vorzugsweise mit dem Deckel verschlossen wird, insbesondere der Raum, in welchem ein Falzprozess stattfindet. Vorzugsweise wird der Arbeitsraum von einem Gehäuse umgeben und grenzt so den Arbeitsraum des Verschliessers ab (und ermöglicht so das Bilden einer Hygienezone).

Insbesondere kann das Gehäuse eine Verkleidung, Umhüllung, Verschalung als oder Ummantelung angesehen werden, welches den Arbeitsraum zumindest teilweise umgibt. Dabei kann das Gehäuse den Arbeitsraum nach Aussen abschliessen und / oder abschirmen, sodass eine Atmosphäre im Arbeitsraum hygienisch von der Umgebung abgetrennt wird.

Die Verschliessvorrichtung kann einen Verschliesskopf zum Verschliessen des Behälters mit dem Deckel sein. Dabei kann der Verschliesskopf Falzmittel zum Falzen des Deckels an den Behälter umfassen. Die Falzmittel können dabei eine Falzrolle und einen Falzkopf sein. Der beziehungsweise jeder Verschliesskopf kann also mindestens eine Falzrolle (besonders bevorzugt zwei Falzrollen) und einen Falzkopf umfassen. Dabei kann der Verschliesskopf um eine Falzachse rotierbare Falzwellen umfassen, wobei an einem Ende der jeweiligen Falzwelle das Falzmittel angeordnet ist (Falzkopf und Falzrolle sind also insbesondere über jeweilige Falzwellen rotierbar).

Der erfindungsgemässe Verschliesser kann weiter die Hubstation (beziehungsweise eine Vielzahl von Hubstationen) zum Anheben des Behälters umfassen. Die Hubstationen können dabei gegenüber der Verschliessköpfe angeordnet sein.

In der Praxis kann der Verschliesser eine Behälterzuführung zum Zuführen der Behälter (wie zum Beispiel einen Einführtisch) zum Arbeitsraum und eine Behälterabführung zum Abführen der Behälter aus dem Arbeitsraum umfassen. Dabei kann zwischen der Behälterzuführung und der Behälterabführung eine Trennwand oder Blende angeordnet sein, welche eine Kreuzkontamination zwischen einlaufenden und auslaufenden Behältern vermeidet.

Der erfindungsgemässe Verschliesser ist bevorzugt als ein Dosenverschliesser ausgestaltet. Der Dosenverschliesser weist üblicherweise mehrere karussellförmig angeordnete gleichartige Stationen (von vorzugsweise Verschliessköpfen und Hubstationen) auf, in denen jeweils eine Dose mit einem Dosendeckel verschlossen wird.

Dabei kann der Behälter eine Dose und der Deckel ein Dosendeckel sein, welche durch den Dosenverschliesser miteinander gefalzt werden.

Der Dosenverschliesser umfasst zum Verschliessen der Dose bevorzugt mehrere Verschliessköpfe (wie vorangehend beschrieben mit mehreren Falzrollen und einem Falzkopf). Im Betriebszustand werden die Falzrollen mit ihrem jeweiligen Falzprofil in Kontakt mit einem Dosendeckelflansch des Dosendeckels und einem Dosenflansch der Dose gebracht. Durch Rotation der Dose wird dann die Falzrolle in Umfangsrichtung der Dose rotiert, wobei der Dosenflansch mit dem Dosendeckelflansch gefalzt wird. Zur Rotation der Dose wird die Dose bevorzugt zwischen dem Falzkopf und einer Stütze (insbesondere der Hubstation) eingespannt, wobei der Falzkopf mit der Falzwelle um die Falzachse rotiert wird.

In der Praxis umfasst der Dosenverschliesser dabei vorzugsweise wie im Stand der Technik eine Einspannvorrichtung aus Falzkopf und Hubstation, mit welcher die Dose zum Verschliessen in axialer und radialer Richtung fixiert wird und in Umfangsrichtung rotiert werden kann.

Im Rahmen der Erfindung kann unter der Dose ein rotationssymmetrischer Behälter verstanden werden, welcher mittels des Dosenverschliessers und der zugehörigen Falzrolle verschlossen wird. Eine Dose kann vorzugsweise ein Metall, insbesondere Aluminium oder Stahl umfassen.

Prinzipiell kann der Verschliesser bevorzugt mindestens zwei Arten Falzrollen mit vorzugsweise unterschiedlichen Falzprofilen umfassen (wobei der entsprechende Verschliesskopf Falzrollen beider Arten umfasst), sodass Dosen nach einem Doppelfalzprinzip verschlossen werden können, bei welchem die Dosen in der Regel in zwei Stufen verschlossen werden. Je eine Art Falzrolle ist dabei für eine Stufe zuständig. Die erste Art Falzrolle fertigt einen Vorfalz an, während die zweite Art Falzrolle die Dose / das Gebinde komplett verschliesst.

Im erfindungsgemässen Verfahren können Dosendeckel und Dosenkörper vor dem eigentlichen Falzprozess an einem definierten Punkt zusammengeführt werden. Das Zuführen der Dosendeckel erfolgt dabei durch die erfindungsgemässe Zufuhreinrichtung, auf welcher die Dosendeckel aufliegen. Die Dosenkörper werden durch die Behälterzuführung zugeführt. Die Dosenkörper gelangen von der Behälterzuführung auf eine der jeweiligen Hubstationen (welche in das Karussell integriert sind). Auf einer Umdrehung des Karussells führen die Hubstationen vorzugsweise eine kurvengesteuerte Hubbewegung aus, um die Dosenkörper von unten an die Dosendeckel und später den Falzkopf einzufahren.

Nach einer bestimmten Hubstrecke kommt der Dosenkörper mit dem Dosendeckel in Berührung.

Vorzugsweise umfasst der Dosenverschliesser noch eine Ausstosselement. Das Ausstosselement ist zum Beispiel an einer Ausstossstange befestigt, welche eine Linearbewegung entlang der axialen Richtung innerhalb einer Falzwelle (der Falzkopf ist an dieser Falzwelle befestigt) macht. Vorzugsweise kurvengesteuert wird in der Abwärtsbewegung zuerst der Dosendeckel in der Deckelführung geklemmt. Sobald der Dosenkörper in den Dosendeckel eingefahren ist, wechselt der Ausstosselement die Richtung des Hubs und fährt gleichmässig mit der Hubstation nach oben. Die unterstützende Funktion des Ausstosselements endet mit dem Einfahren von Dosenkörper und Dosendeckel in den Falzkopf. Ab diesem Moment ist die Dose zwischen Hubstation und Falzkopf eingespannt. Anschliessend wird der eigentliche Falzprozess durchgeführt.

Prinzipiell kann der erfindungsgemässe Verschliesser analog zu den bereits aus dem Stand der Technik bekannten Dosenverschliessern sein, unterscheidet sich jedoch in der Zufuhreinrichtung, um so die Nachteile des Standes der Technik zu vermeiden.

Im Folgenden werden die Erfindung und der Stand der Technik anhand von Ausführungsbeispielen unter Bezugnahme auf die Zeichnungen näher erläutert.
- Fig. 1: eine Draufsicht eines Dosenverschliessers des Standes der Technik;
- Fig. 2: einen Begasungsrotor des Standes der Technik;
- Fig. 3: eine Draufsicht eines erfindungsgemässen Dosenverschliessers;
- Fig. 4A: eine Draufsicht einer erfindungsgemässen Zufuhreinrichtung;
- Fig. 4B: eine perspektivische Ansicht einer erfindungsgemässen Zufuhreinrichtung;
- Fig. 5: eine Seitenansicht einer erfindungsgemässen Zufuhreinrichtung.

Fig. 1 und Fig. 2 wurden bereits vorangehend bei der Darstellung des Standes der Technik beschrieben.

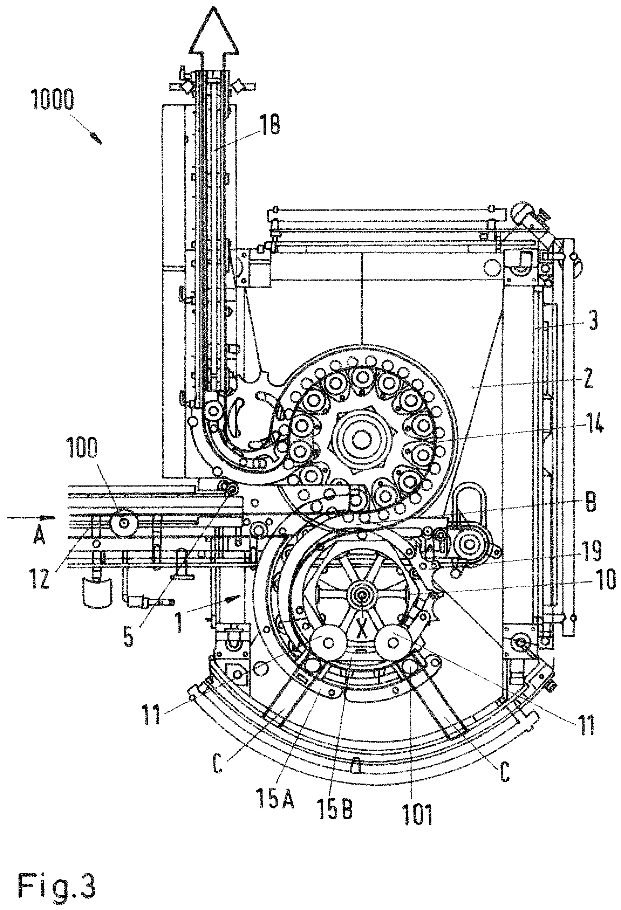

Fig. 3 zeigt eine Draufsicht eines erfindungsgemässen Dosenverschliessers 1000. Prinzipiell läuft der Verschliessprozess analog zum Stand der Technik ab, also analog wie zu Fig. 1 und 2 beschrieben.

Der Dosenverschliesser 1000 gemäss Fig. 3 umfasst zwei Deckelbereitstellungsvorrichtungen 11 zur Bereitstellung eines Deckels 101 an eine erfindungsgemässe Zufuhreinrichtung 1, welche die Deckel 101 zur Dose 100 transportiert.

Dabei umfasst die Zufuhreinrichtung 1 eine Bewegungsvorrichtung 10, welche derart beweglich angeordnet ist, dass der Deckel 101 durch die Bewegungsvorrichtung 10 zur Dose 100 bewegt werden kann. Dafür ist die Bewegungsvorrichtung 10 an einer Welle befestigt und durch diese Welle rotierbar um eine Achse X angeordnet, sodass der Deckel 101 durch eine Rotation der Bewegungsvorrichtung 10 bewegbar ist.

Ausserdem umfasst die Zufuhreinrichtung 1 eine an der Bewegungsvorrichtung 10 angeordnete Deckelführung 15A, 15B zum Führen des Deckels 101 zu der Dose 100. Dafür hat die Deckelführung 15A, 15B eine erste Schiene 15A und eine zur ersten Schiene parallel verlaufende zweite Schiene 15B, wobei der Deckel 101 derart zwischen den Schienen 15A, 15B angeordnet wird, dass der Deckel 101 durch die Bewegung des Mitnehmers 19 zwischen den Schienen 15A, 15B bis zum Punkt B geführt wird, wo der Deckel 101 mit der entlang A einlaufenden Dose 100 vereint wird.

An der Bewegungsvorrichtung 10 angeordnete Mitnehmer 19 sind dabei derart auf einer Oberfläche der Bewegungsvorrichtung 10 verteilt und angeordnet, dass sie die auf der Deckelführung 15A, 15B angeordneten Deckel 101 in Bewegung versetzen können.

Ausserdem umfasst der Verschliesser 1000 einen Falzprozess / Karussell mit Falzstationen 14 zum Verschliessen der Dose 100 mit dem Deckel 101. Dabei ist der Falzprozess 14 in einem von einem Gehäuse 3 umgebenen Arbeitsraum 2 des Dosenverschliessers 1000 angeordnet.

Der Deckel 101 dabei wird entlang des Pfeiles C durch die Deckelbereitstellungsvorrichtung 11 in den Arbeitsraum 2 des Dosenverschliesser 1000 eingebracht und von der Deckelführung 1 zur Dose 100 geführt.

Hierbei werden die Deckel 101 auf den Schienen 15A, 15B abgelegt. Durch Rotation der Bewegungsvorrichtung werden die Deckel 101 weiter transportiert.

Dann werden die Dosen 100 mit Deckel 101 zum Falzprozess 14 weitergeführt und dort verschlossen.

Dabei werden die Dosen 100 mit Deckel 101 eingespannt und durch den Falzprozess 14 verschlossen. Die verschlossene Dose wird durch einen weiteren Rotor in einen Dosenausgang 18 gefördert.

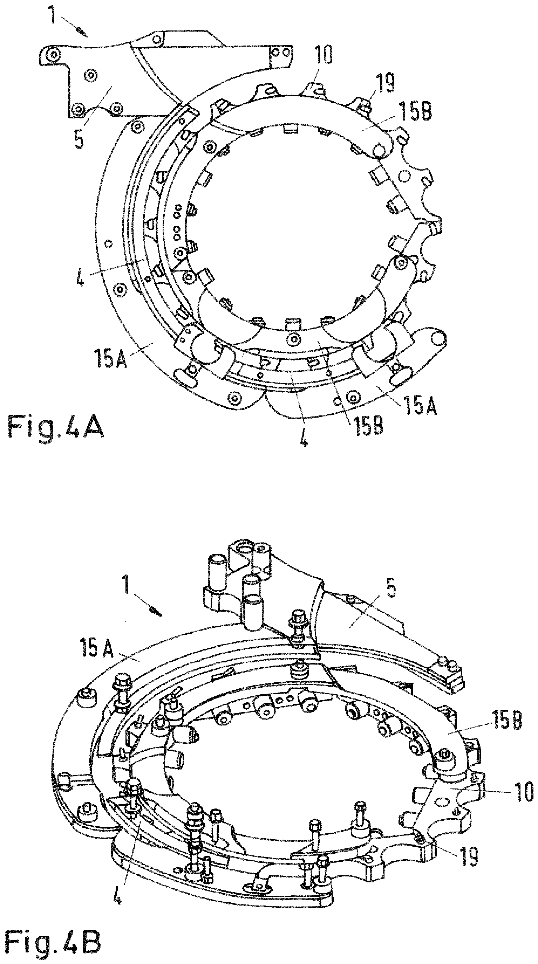

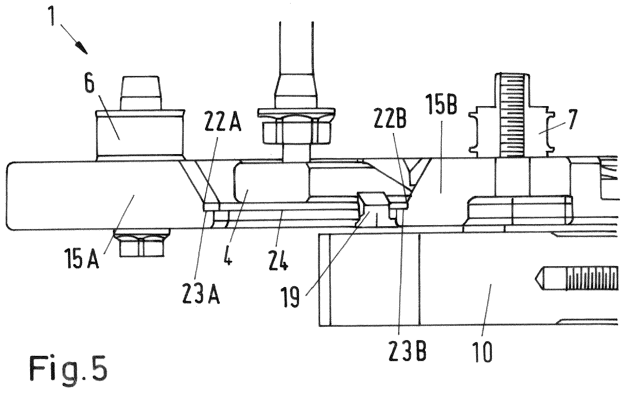

Fig. 4A zeigt eine Draufsicht der erfindungsgemässen Zufuhreinrichtung 1, Fig. 4B eine perspektivische Ansicht der erfindungsgemässen Zufuhreinrichtung 1 und Fig. 5 eine Seitenansicht der erfindungsgemässen Zufuhreinrichtung 1.

Die Bewegungsvorrichtung 10 ist sternförmig ausgestaltet, wobei auf jeder Sternspitze ein Mitnehmer 19 zur Aufnahme und Bewegung eines Deckels angebracht ist.

Die Deckelführung 15A, 15B umfasst die erste Schiene 15 A und die zur ersten Schiene 15A abschnittsweise parallel verlaufende zweite Schiene 15B. Dafür ist die erste Schiene 15A halbringförmig und die zweite Schiene 15B ringförmig und über der Bewegungsvorrichtung 10 angeordnet.

Dabei umfasst die erste Schiene 15A die erste Leitfläche 22A sowie die zweite Schiene 15B die zweite Leitfläche 22B derart, dass der Deckel durch die erste und die zweite Schiene 15A, 15B zum Behälter führbar ist.

Zusätzlich umfasst die erste Schiene 15A die erste Abstützfläche 23A sowie die zweite Schiene 15B die zweite Abstützfläche 23B derart, dass der Deckel über die erste und die zweite Schiene 15A, 15B zum Behälter führbar ist, also auf den Abstützflächen 23A, 23B abgelegt und darüber zum Behälter bewegt wird.

Die Bewegungsvorrichtung 10 ist mit nach oben gerichteten Mitnehmern 19 unter der ersten und zweiten Schiene 15A, 15B angeordnet. Hierbei sind die Mitnehmer 19 in einer Ausnehmung 24 zwischen der ersten und zweiten Schiene 15A, 15B bewegbar.

Ausserdem werden die erste und zweite Schiene 15A, 15B durch eine Vielzahl von Schienenelementen gebildet.

Die erste und zweite Schiene 15A, 15B sind mit den Leit- und Abstützflächen 22A, 22B, 23A, 23B so ausgestaltet, dass diese nach oben offen sind. Damit kann ein Reinigungsmedium ungehindert die Deckelauflage (also die Leit- und / oder Abstützflächen) reinigen.

Des Weiteren umfasst die Deckelführung 15A, 15B eine Begasungsvorrichtung 5. Diese Begasungsvorrichtung 5 ist an einer dem Falzprozess 14 zugewandten Seite der ersten Schiene 15A angeordnet.

Während die erste und zweite Schiene 15A, 15B so ausgeformt sind, dass der Deckel 101 radial geführt wird und sich somit vorzugsweise koradial zur Bewegungsvorrichtung 10 bewegt, ist die Begasungsvorrichtung 5 derart ausgeformt, dass der Deckel 101 in einem Begasungsbereich der Begasungsvorrichtung 5 linear geführt wird. Dies hat den Vorteil, dass die Begasungswerte verbessert und die Übergabe zum Behälter optimiert werden kann.

Bei der Begasung durch die Begasungsvorrichtung 5 wird ein Gas wie beispielsweise ein Inertgas zu einer Unterseite des Deckels 101 gefördert. Somit kann gewährleistet werden, dass ein Restvolumen des Behälters 100, in welchem kein Lebensmittel angeordnet ist, vor dem Verschliessen im Wesentlichen mit dem Gas befüllt ist, wobei die ursprünglich im Restvolumen vorhandene Luft durch das Gas möglichst vollständig verdrängt wird. Hiermit lässt sich gegebenenfalls eine längere Haltbarkeit des in dem Behälter 100 angeordneten Lebensmittels erreichen.

Bevor die Deckel 101 jedoch auf die Deckelführung 15A, 15B aufgelegt werden, findet ein Abstapelprozess statt, bei welchem die Deckel 101 von einem Stapel einzeln getrennt werden. Anschliessend liegt der Deckel 101 wie vorangehend beschrieben, zwischen seitlichen Deckelführungen also den Schienen 15A, 15B auf. Danach wird der Deckel 101 von der als Deckelstern 10 ausgeformten Bewegungsvorrichtung 10 mithilfe der radial angebrachten Deckelmitnehmer 19 zwischen den seitlichen Deckelführungen 15A, 15B weiter bis zu einem definierten Punkt (dem Punkt B) transportiert. Die seitlichen Deckelführungen 15A, 15B bilden dabei zusammen betrachtet die Deckellaufbahn.

Die Schiene 15B ist dabei eine innere Deckelführung 15B. Die erste und zweite Schiene 15A, 15B werden jeweils durch eine Vielzahl von Schienenelementen gebildet. Das Schienenelement der zweiten Schiene 15B, welches sich direkt unter der Abstapelung befindet, muss bei einem Formatwechsel nicht getauscht werden. So werden Wechsel- und Stillstandzeiten verringert.

Der Deckel 101 wird von der Abstapelung bis hin zum Punkt B komplett zwischen den Schienen 15A, 15B aufgelegt geführt, und wird nicht auf den Deckelstern 10 abgelegt.

Ausserdem ist eine Niederhaltevorrichtung 4 derart über den Schienen 15A, 15B angeordnet, dass eine Bewegbarkeit des Deckels 101 nach oben eingeschränkt ist. So wird der Deckel 101 gegen ein Herausfallen gesichert.

Die Schienen 15A, 15B umfassen ein Schnellwechselsystem 6, 7 in Form Schnellwechsel-Distanzbolzen 6 und 7. So können die Schienen 15A, 15B wiederholgenau getauscht werden. Dies erspart ein erneutes Einstellen des Formatteils nach einem Werkzeugwechsel, welches sich natürlich auf die Werkzeugwechselzeiten positiv ausschlägt.

Die Erfindung ist nicht auf die offenbarten Ausführungsformen beschränkt. Andere Variationen der offenbarten Ausführungsformen können von Fachleuten beim Praktizieren einer beanspruchten Erfindung aus einem Studium der Zeichnungen, der Offenbarung und der abhängigen Ansprüche verstanden und bewirkt werden. In den Ansprüchen schliesst das Wort "umfassend" keine anderen Elemente oder Schritte aus, und der unbestimmte Artikel "ein" oder "eine" schliesst keine Vielzahl aus. Die blosse Tatsache, dass bestimmte Massnahmen in voneinander verschiedenen abhängigen Ansprüchen wiederholt werden, bedeutet nicht, dass eine Kombination dieser Massnahmen nicht vorteilhaft verwendet werden kann. Jegliche Bezugszeichen in den Ansprüchen sollten nicht als Einschränkung des Umfangs ausgelegt werden.

Besonders bevorzugte Ausführungsformen der Erfindung umfassen eine Kombination der Schienen mit Leitflächen und Abstützflächen sowie der rotierbar angeordneten Bewegungsvorrichtung.

## Patentansprüche

1. Zufuhreinrichtung für einen Verschliesser (1000) zum Führen eines Deckels (101) zu einem Behälter (100) umfassend
eine Bewegungsvorrichtung (10), welche derart beweglich angeordnet ist, dass der Deckel (101) durch die Bewegungsvorrichtung (10) bewegbar ist, und
eine an der Bewegungsvorrichtung (10) angeordnete Deckelführung (15A, 15B) zum Führen des Deckels (101) zu dem Behälter (100),
**dadurch gekennzeichnet, dass**
die Deckelführung (15A, 15B) eine erste Leitfläche (22A) und eine zweite Leitfläche (22B) umfasst, wobei der Deckel (101) derart zwischen der ersten Leitfläche (22A) und der zweiten Leitfläche (22B) angeordnet werden kann, dass der Deckel (101) durch die relative Bewegung der Bewegungsvorrichtung (10) zu der ersten Leitfläche (22A) und der zweiten Leitfläche (22B) zum Behälter führbar ist.

2. Zufuhreinrichtung nach Anspruch 1, wobei die Deckelführung (15A, 15B) derart stationär angeordnet ist, dass der Deckel (101) durch die Bewegung der Bewegungsvorrichtung (10) entlang der Deckelführung (15A, 15B) zum Behälter führbar ist.

3. Zufuhreinrichtung nach einem der vorangehenden Ansprüche, wobei die Bewegungsvorrichtung (10) einen Mitnehmer (19) umfasst, wobei der Mitnehmer (19) derart an der Bewegungsvorrichtung (10) angebracht ist, dass der Deckel (101) durch den Mitnehmer (19) aufnehmbar und durch den Mitnehmer (19) in der Deckelführung (15A, 15B) bewegbar ist.

4. Zufuhreinrichtung nach Anspruch 3, wobei der Mitnehmer (19) zwischen der ersten Leitfläche (22A) und der zweiten Leitfläche (22B) bewegbar angeordnet ist.

5. Zufuhreinrichtung nach Anspruch 3 oder 4, wobei die Bewegungsvorrichtung (10) eine Vielzahl von Mitnehmern (19) umfasst, sodass eine Vielzahl der Deckel (101) durch die Vielzahl der Mitnehmer (19) aufnehmbar und durch die Deckelführung (15A, 15B) bewegbar ist.

6. Zufuhreinrichtung nach Anspruch 5, wobei die Vielzahl der Mitnehmer (19) entlang eines Umfangs der Bewegungsvorrichtung (10) verteilt angeordnet ist.

7. Zufuhreinrichtung nach Anspruch 6, wobei die Vielzahl der Mitnehmer (19) kreisförmig entlang des Umfangs der Bewegungsvorrichtung (10) angeordnet ist.

8. Zufuhreinrichtung nach einem der vorangehenden Ansprüche, wobei die Bewegungsvorrichtung (10) durch eine Welle rotierbar um eine Achse (X) angeordnet ist, sodass der Deckel (101) durch eine Rotation der Bewegungsvorrichtung (10) bewegbar ist.

9. Zufuhreinrichtung nach Anspruch 8, wobei die Bewegungsvorrichtung (10) scheibenförmig ausgestaltet ist und die Welle in einem Mittelpunkt der Bewegungsvorrichtung (10) angeordnet ist.

10. Zufuhreinrichtung nach einem der vorangehenden Ansprüche, wobei die Deckelführung (15A, 15B) eine erste Schiene (15A) und eine zur ersten Schiene (15A) parallel verlaufende zweite Schiene (15B) umfasst und die erste Schiene (15A) die erste Leitfläche (22A) sowie die zweite Schiene (15B) die zweite Leitfläche (22B) derart umfasst, dass der Deckel (101) durch die erste und die zweite Schiene (15A, 15B) zum Behälter (100) führbar ist.

11. Zufuhreinrichtung nach Anspruch 10, wobei die erste und / oder zweite Schiene (15A, 15B) durch eine Vielzahl von Schienenelementen gebildet werden.

12. Zufuhreinrichtung nach Anspruch 10 oder 11, wobei zwischen der ersten und der zweiten Schiene (15A, 15B) derart eine Ausnehmung (24) vorgesehen ist, dass die Bewegungsvorrichtung (10) zur Bewegung des Deckels (101) durch die Ausnehmung (24) bewegbar ist.

13. Zufuhreinrichtung nach einem der vorangehenden Ansprüche umfassend eine Niederhaltevorrichtung (4), wobei die Niederhaltevorrichtung (4) derart an der Deckelführung (15A, 15B) angeordnet ist, dass eine Bewegbarkeit des Deckels (101) in ein Raumrichtung einschränkbar ist.

14. Zufuhreinrichtung nach Anspruch 1, wobei die Deckelführung (15A, 15B) eine erste Schiene (15A) mit der ersten Leitfläche (22A) und eine zweite Schiene (15B) mit der zweiten Leitfläche (22B) umfasst, und die Zufuhreinrichtung eine Niederhaltevorrichtung (4) umfasst, welche derart zwischen den Schienen (15A, 15B) angeordnet ist, dass eine Bewegbarkeit des Deckels (101) in ein Raumrichtung einschränkbar ist.

15. Verschliesser, umfassend:
ein Karussell mit einer Vielzahl von Verschliessvorrichtungen;
eine Behälterzufuhr (12) für Behälter (100), insbesondere mit einem Produkt gefüllte Behälter, zu dem Karussell;
einen Zufuhreinrichtung (1) nach einem der vorangehenden Ansprüche zum Führen der Deckel (101) zum Behälter (100); und
einen Auslauf für verschlossene Behälter von dem Karussell.

16. Verfahren zum Verschliessen eines Behälters (100) mit einem Deckel (101), umfassend:
Bereitstellen einer Zufuhreinrichtung (1) nach einem der Ansprüche 1 bis 14; und
Transportieren des Deckels (101) mit der Zufuhreinrichtung (1) zu dem Behälter (100); und
Auflegen des Deckels (101) auf eine Öffnung des Behälters (100); und Verschliessen des Behälters (100) mit dem Deckel (101).

17. Verfahren nach Anspruch 16, wobei das Verschliessen des Behälters (100) umfasst:
Positionieren des Behälters (100) auf einem Hubelement;
Falzen des Deckels (101) an den Behälter (100) mittels wenigstens einer Falzrolle und einem Falzkopf.
